# EUROPÄISCHE PATENTSCHRIFT

(11) **EP 0 574 593 B1**
(45) Veröffentlichungstag und Bekanntmachung des Hinweises auf die Patenterteilung: **12.01.1994**
(21) Anmeldenummer: 92108336.6
(22) Anmeldetag: 18.05.1992
(51) Int. Cl.: B60Q 3/04

(54) **Verfahren zur Anbringung von mehreren einzelnen Symbolen auf ein Prisma, insbesondere zum Einsatz in eine frontseitige Sichtblende eines Kraftfahrzeug-Bediengerätes**
System for application of different symbols to a prism, particularly on the screen of a control apparatus for vehicles
Procédé d'application de différents symbols sur un prisme, en particulier sur la face d'un dispositif de commande pour véhicules

(43) Veröffentlichungstag der Anmeldung: 22.12.1993
(73) Patentinhaber: SIEMENS AKTIENGESELLSCHAFT, 80333 München (DE)
(72) Erfinder: Hlousek, Peter, W-8630 Coburg (DE)

(56) Entgegenhaltungen:
- DE-A- 2 443 905
- DE-U- 8 809 462
- DE-U- 8 904 114
- GB-A- 2 190 780
- PATENT ABSTRACTS OF JAPAN vol. 7, no. 127 (P-201)(1272) 3. Juni 1983

## Beschreibung

Die Erfindung bezieht sich auf ein Verfahren zur Anbringung von mehreren einzelnen Symbolen auf ein Prisma, insbesondere zum Einsatz in eine frontseitige Sichtblende eines Kraftfahrzeug-Bediengerätes, gemäß Anspruch 1.

Zur Beleuchtung von Symbolen einer Heizungs- bzw. Klimaanlagenbetätigung werden Lichtträger in Form von mit durchleuchtbaren Symbolen versehenen Prismen zwischen dem rückseitigen Grundkörper und der frontseitigen Sichtblende eines Bediengerätes, z.B. im Armaturenbrett eines Kraftfahrzeuges, eingebaut.

Es ist wünschenswert, daß bei einem derartigen Bediengerät die Symbolflächen gegenüber der übrigen Oberfläche der Sichtblende möglichst wenig vertieft und somit weitgehend in einer Ebene liegen und daß von der rückseitigen Beleuchtung jegliche Fremdlichtaustritte zur frontseitigen Sichtblende unterbunden werden.

Ein die vorgenannten Forderungen erfüllendes und gleichzeitig auf fertigungs- und montagetechnisch einfache Weise herstellbares Prisma ist durch die Lehre des Anspruchs 1 möglich. Bei einem nach dem erfindungsgemäßen Verfahren hergestellten Prisma können die vorteilhafter Weise einerseits derart gegenüber der Prisma-Grundfläche hervorgehobene Symbol-Aufnahmeflächen vorgesehen werden, daß diese durch entsprechende Wandöffnungen der frontseitigen Sichtblende gegebenenfalls bis zu deren Forderseite bündig durchsteckbar sind und andererseits das Aufbringen der verschiedenen Symbolflächen auf die einzelnen Symbol-Aufnahmeflächen in einem einzigen Arbeitsgang erfolgen kann.

In weiterer fertigungstechnischer Vereinfachung ist die Flächen-Außenkontur der Symbol-Folie der Flächen-Außenkontur des Prismas derart angepaßt, daß nach dem Austrennen der Symbol-Folienflächen die verbleibenden Symbol-Folienreste auf die gegenüber den Symbol-Aufnahmeflächen tiefer liegende Prisma-Grundfläche gedrückt und dort ohne Notwendigkeit der Entfernung eines Folienabfalls und ohne Beeinträchtigung der Betriebstüchtigkeit des Bediengerätes fixiert werden können.

Um einerseits die verschiedenen örtlich voneinander getrennten Symbol-Folienflächen als Teile einer einstückigen Symbol-Folie fertigen und montieren zu können und andererseits auf montagetechnisch einfacher Weise die Symbol-Folienflächen auf die erhabenen Symbol-Aufnahmeflächen aufbringen und von dem übrigen Symbol-Folienrest trennen zu können, ist nach einer ersten Ausgestaltung der Erfindung vorgesehen, die Symbol-Folienflächen von der übrigen Symbol-Folie entlang ihrer Außenkontur in einem Vorbearbeitungsgang durch Schwächung der Folienstärke im Bereich der Konturen vorzutrennen; nach einer alternativen Vorgehensweise ist vorgesehen, die Symbol-Folienflächen von der übrigen Symbol-Folie in einem Vorarbeitsgang entlang ihrer Außenkontur bis auf erst beim Andrücken des Prismas austrennbare Verbindungsstege durch ansonsten vollständiges Freistanzen entlang der Konturen zu trennen.

Um die beim gegenseitigen Andrücken des Prismas einerseits und der Symbolfolie andererseits ausgetrennten Symbol-Folienflächen gleichzeitig auf ihren erhabenen Symbol-Aufnahmeflächen bzw. die Symbol-Folienreste auf der Prisma-Grundfläche haftend fixieren zu können, ist auf die Rückseite der Symbol-Folie eine Klebemittelschicht aufgetragen und zur Vermeidung eines Zusammenklebens der Symbol-Folien vor dem eigentlichen Aufdrückvorgang eine Schutzfolie übergezogen, die vor dem eigentlichen Aufdrückvorgang entfernt wird.

Das erfindungsgemäße Verfahren wird im folgenden anhand eines schematisch dargestellten Prismas bzw. einer schematisch dargestellten Symbol-Folie in der Zeichnung näher erläutert; darin zeigen:
- FIG 1: eine axial Draufsicht auf ein der frontseitigen Sichtblende eines Bediengerätes zugewandtes Prisma;
- FIG 2,3,4,5: das Prisma gemäß FIG 1 in den eingetragenen Schnittverläufen;
- FIG 6: eine Draufsicht auf die der Rückseite der frontseitigen Sicht blende zugewandten Symbol-Folie vor ihrem Aufdrücken auf das Prisma gemäß FIG 1;
- FIG 7: einen Schnitt durch die Symbol-Folie gemäß FIG 6 im Schnittverlauf VII-VII.

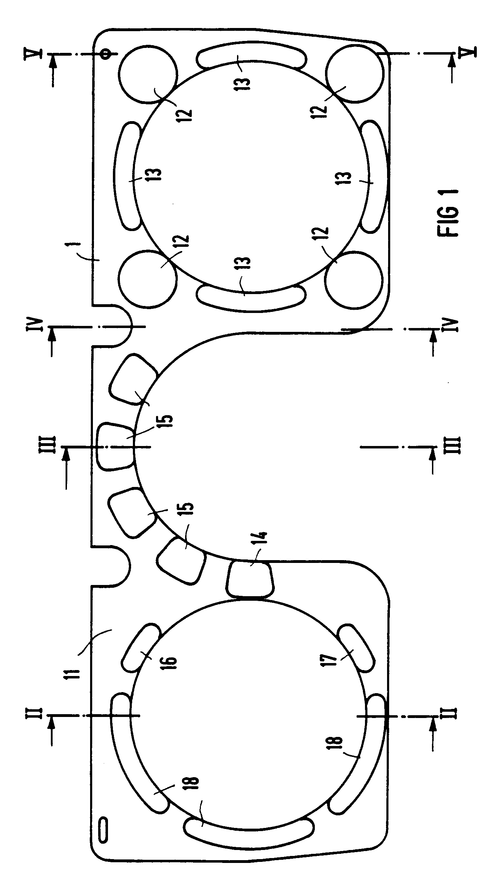

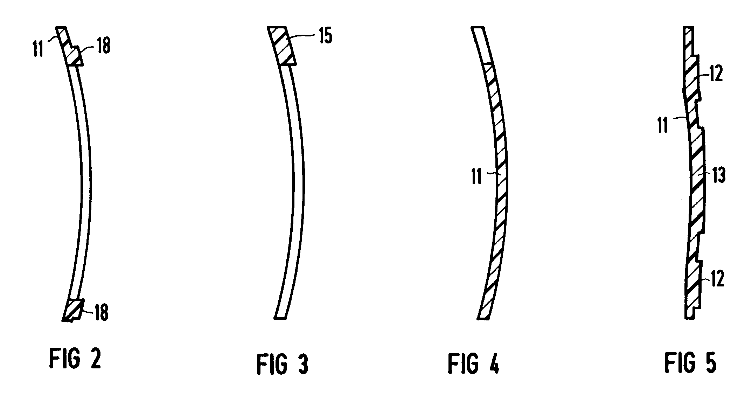

FIG 1 bis 5 zeigen ein lichtdurchlässiges Kunststoff-Prisma zum Einsatz in die frontseitige Sichtblende eines Kraftfahrzeug-Bediengerätes für hier nicht dargestellte Drehschalter für eine rechtsseitige Einstellung der Luftverteilung, eine linksseitige Einstellung der Lufttemperatur und eine mittige Einstellung verschiedener Ventilatorstufen für die Luftförderung.

Für die rechtsseitige Luftverteilungseinstellung sind vier kreisförmige Symbol-Aufnahmeflächen 12 und zwischen diesen teilkreisförmige Schalterlaufflächen 13 über den Umfang verteilt angeordnet; sämtliche Symbol-Aufnahmeflächen des Prismas 1 sind erhaben gegenüber der Prisma-Grundfläche 11, derart daß sie in hier nicht näher dargestellter Weise durch angepaßte Wandöffnungen einer vorgesetzten frontseitigen Sichtblende eines Bediengerätes, z.B. in einem Kfz.-Armaturenbrett, ein- bzw. durchsteckbar sind. In gleicher Weise weist die linksseitige Lufttemperatureinstellung zwei Symbolaufnahmeflächen 17 für die Einstellung einer Kaltluft bzw. Warmluft und zwischen diesen über den Umfang verteilt Schalterlaufflächen 18 auf. Für die mittige Ventilatoreinstellung sind Symbol-Aufnahmeflächen 15 für vier verschiedene Ventilatorgeschwindigkeitsstufen und eine Symbol-Aufnahmefläche 16 für ein Ventilatorsymbol vorgesehen.

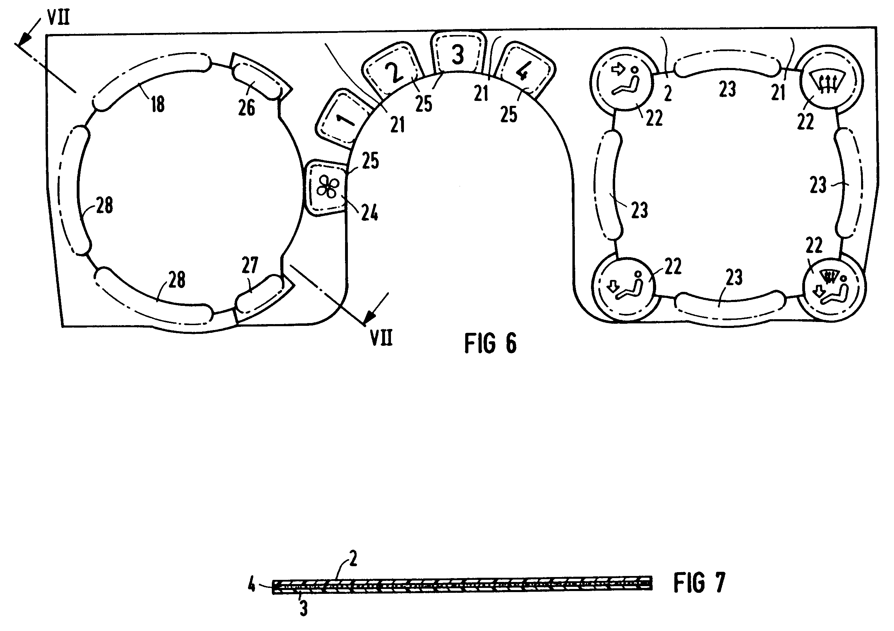

FIG 6 zeigt die Draufsicht auf eine zunächst ebene Symbol-Folie 2, in der die einzelnen Symbol-Folienflächen 22-28 entsprechend ihrer örtlichen Zuordnung zu den einzelnen Symbol-Aufnahmeflächen 12-18 des Prismas 1 gemäß FIG 1 verteilt angeordnet sind. Die in den Symbol-Folienflächen 22-28 eingetragenen Symbole sind lichtdurchlässig ausgebildet, während die übrige Fläche lichtundurchlässig, insbesondere schwarz bzw. zur Anzeige einer warmen Temperatur in der Symbol-Aufnahmefläche 16 rot lichtdurchlässig und zur Anzeige einer kalten Temperatur in der Symbol-Aufnahmefläche 17 blau lichtdurchlässig eingefärbt ist. Die übrigen nicht mit durchscheinenden Symbolen versehenen Symbol-Aufnahmeflächen 13 und 18 sind als insgesamt hell mit heller Symbol-Folienfläche belegte durchscheinende Teile der Symbol-Folie 2 ausgeführt.

Wie in FIG 7 angedeutet, trägt die Symbol-Folie 2 auf ihrer Rückseite eine Klebemittelschicht 4, die zunächst ihrerseits durch eine Schutzfolie 3 abgedeckt ist.

Beim Auf- bzw. Anbringen der Symbol-Folienflächen 21-28 auf ihre zugehörigen Symbol-Aufnahmeflächen 12-18 des Prismas 1 wird nach dem Entfernen der Schutzfolie 3 die Symbol-Folie 2 mit der Klebemittelschicht 4 versehenen Rückseite auf das Prisma 1 aufgelegt. Durch gegenseitiges Andrücken des Prismas 1 einerseits und der Symbol-Folie 2 andererseits in einer Preßvorrichtung mit im Bereich der Symbol-Aufnahmeflächen 12-18 vorgesehenen Freidrückräumen werden nunmehr die Symbol-Folienflächen 22-28 im Bereich ihrer vorgetrennten Außenkonturen aus der Grundfläche 21 der Symbol-Folie 2 herausgetrennt und auf die Symbol-Aufnahmeflächen 12-18 fixiert aufgedrückt, während die Symbol-Folienrestflächen durch entsprechende Ausbildung der Preßvorrichtung auf die Prisma-Grundfläche 11 aufgedrückt und dort ebenfalls fixiert werden.

Wie aus FIG 6 ersichtlich weisen die mit undurchlässiger Abdeckung versehenen Symbole der Symbol-Folienflächen 22,24,25, 26,27 in ihren in die Symbol-Folie 2 ragenden Randbereichen eine über die in strichpunktierten Linien angedeuteten vorgetrennten Konturen im Vollinienzug dargestellte überstehende Randbereiche auf, derart daß diese einen Lichtdurchgang hindernden Randbereiche in die Ebene der Grundfläche 11 des Prismas 1 gedrückt und dort fixiert werden und somit ein Rand-Streulicht bei nicht vollständiger randseitiger dichter Einpassung der erhabenen Symbol-Aufnahmeflächen in die Durchstecköffnungen der frontseitigen Sichtblende des Bediengerätes vermieden wird.

## Patentansprüche

1. Verfahren zur Anbringung von mehreren einzelnen Symbolen auf ein Prisma (1), insbesondere zum Einsatz in eine frontseitige Sichtblende eines Kraftfahrzeug-Bediengerätes, mit mehreren zu einer Prisma-Grundfläche (11) erhabenen Symbol-Aufnahmeflächen (12-18), bei dem die Symbole in ihrer gegenseitigen Zuordnung Teile einer Symbolfolie (2) sind und durch gegenseitiges Andrücken von Prisma (1) einerseits und Symbolfolie (2) andererseits aus dieser in Form von Symbol-Folienflächen (22-28) ausgetrennt und auf die Symbol-Aufnahmeflächen (12-18) aufgedrückt werden.

2. Verfahren nach Anspruch 1, bei dem die Flächen-Außenkontur der Symbol-Folie (2) der Flächen-Kontur des Prismas (1) angepaßt und die nach dem Austrennen der Symbol-Folienflächen (21-28) verbleibenden Symbol-Folienreste auf die Prisma-Grundfläche (11) gedrückt werden.

3. Verfahren nach Anspruch 1 oder 2, bei dem in einer Vorbearbeitung die Symbol-Folienflächen (22-28) von der übrigen Symbol-Folie (2) entlang ihrer Außenkontur durch Schwächen der gegenseitigen Folienhaftung vorgetrennt werden.

4. Verfahren nach Anspruch 3, bei dem die Symbol-Folienflächen von der übrigen Symbol-Folie (2) entlang ihrer Außenkontur bis auf erst beim Andrücken des Prismas (1) austrennbaren Verbindungsstege durch Freistanzen getrennt werden.

5. Verfahren nach einem der Anspruche 1-4, bei dem auf die den Symbol-Aufnahmeflächen (22-28) zugewandte Rückseite der Symbolfolie (2) eine Schutzfolie (3) aufgebracht und vor dem Gegendrücken des Prismas (1) entfernt wird.

6. Verfahren nach Anspruch 5, bei dem in einer Vorbearbeitung auf die Symbol-Folie (2) eine Klebemittelschicht (4) mit einer durch Entfernen der Schutzfolie (3) freigebbaren Klebefläche aufgebracht wird.

7. Verfahren nach einem der Ansprüche 1-6, bei dem die Symbol-Folie (2) mit ihrer die Symbole tragenden Sichtseite in eine Preßvorrichtung mit im Bereich der Symbol-Aufnahmeflächen (12-18) vorgesehenen Freidrückräumen gelegt, die Schutzfolie (3) entfernt und das Prisma (1) mit gegen die Symbol-Folie (2) gerichteten Symbol-Aufnahmeflächen (12-18) aufgedrückt wird.

## Claims

1. A method of mounting several individual symbols onto a prism (1) for insertion in particular into a front-side screen of a motor vehicle-operator panel, the prism having several symbol-receiving surfaces (12-18) which are raised relative to a prism base surface (11), by which the symbols, in their mutual coordination, are parts of a symbol foil (2) and, by mutual pressing of the prism (1) on the one hand, and the symbol foil (2) on the other hand, can be separated from the foil in the form of symbol foil surfaces (22-28) and can be pressed onto the symbol-receiving surfaces (12-18).

2. A method according to claim 1, by which the outer surface contour of the symbol foil (2) is adapted to the surface contour of the prism (1), and the symbol foil remnants, which remain after separation of the symbol foil surfaces (21-28), are pressed onto the prism base surface (11).

3. A method according to claim 1 or 2, by which, in one pre-operation, the symbol foil surfaces (22-28) are formerly separated from the rest of the symbol foil (2) along their outer contour by weakening the mutual foil adhesion.

4. A method according to claim 3, by which, by punching free, the symbol foil surfaces are separated from the rest of the symbol foil (2) along their outer contour, with the exception of connecting webs which are not separable until pressing against the prism (1).

5. A method according to one of the claims 1-4, by which a protective foil (3) is applied to the rear side of the symbol foil (2) facing the symbol-receiving surfaces (22-28) and is removed before counter-pressing the prism (1).

6. A method according to claim 5, by which, in a pre-operation, a layer of adhesive (4) is applied to the symbol foil (2), the layer having an adhesive surface area which can be freed by removal of the protective foil (3).

7. A method according to one of the claims 1 - 6, by which the symbol foil (2) is laid with its viewing side bearing the symbols into a pressing arrangement with pressing-free chambers provided in the region of the symbol-receiving surfaces (12-18), the protective foil (3) is removed and the prism (1) is pressed thereon with symbol-receiving surfaces (12-18) directed towards the symbol foil (2).

## Revendications

1. Procédé pour appliquer plusieurs symboles séparés sur un prisme (1), destiné notamment à être utilisé dans un écran frontal d'un appareil de commande d'un véhicule automobile, comportant plusieurs surfaces (12-18) de réception de symboles, qui sont surélevées par rapport à une surface de base (11) du prisme, dans lequel les symboles sont, en leur coordination mutuelle, des parties d'une feuille (2) portant des symboles et on les sépare sous forme de surfaces (22 à 28) de feuille portant des symboles, par une application mutuelle du prisme (1) d'une part et de la feuille (2) portant des symboles d'autre part, et on les applique par pression sur les surfaces (12-18) de réception des symboles.

2. Procédé suivant la revendication 1, selon lequel le contour extérieur de surface de la feuille (2) portant les symboles est adapté au contour de surface du prisme (1) et on applique sous pression les restes de la feuille portant les symboles, qui subsistent après la séparation des surfaces (21 à 28) de feuille portant les symboles, sur la surface de base (11) du prisme.

3. Procédé suivant la revendication 1 ou 2, selon lequel lors d'un traitement préalable, on sépare préalablement les surfaces (22 à 28) de feuille portant des symboles du reste de cette feuille (2), le long de leur contour extérieur, par affaiblissement de l'adhérence mutuelle de feuilles.

4. Procédé suivant la revendication 3, selon lequel on sépare les surfaces de feuille portant les symboles, du reste de cette feuille (2), le long de leur contour extérieur, par découpage, hormis au niveau de barrettes de liaison qui ne peuvent être séparées que lors de l'application du prisme (1).

5. Procédé suivant l'une des revendications 1 à 4, selon lequel on dépose une feuille de protection (3) sur la face arrière, qui est tournée vers les surfaces (22-28) de réception des symboles, de la feuille (2) portant des symboles, et on la retire avant l'application du prisme (1).

6. Procédé suivant la revendication 5, selon lequel, lors d'une étape de traitement préalable, on dépose sur la feuille (2) portant les symboles une couche d'adhésif (4) ayant une surface adhésive pouvant être dégagée par enlèvement de la feuille de protection (3).

7. Procédé suivant l'une des revendications 1-6, selon lequel on met la feuille (2) portant les symboles, par sa face visible qui porte les symboles, dans une presse comportant des espaces non comprimés dans la zone des surfaces (12 à 18) de réception des symboles, on retire la feuille de protection (3) et on applique sous pression le prisme (1) par ses surfaces (12 à 18) de réception des symboles, qui sont tournées vers la feuille (2) portant des symboles.
